# EUROPÄISCHE PATENTANMELDUNG

(11) **EP 4 656 609 A1**
(43) Veröffentlichungstag der Anmeldung: **03.12.2025**
(21) Anmeldenummer: 25174144.3
(22) Anmeldetag: 05.05.2025
(51) Int. Cl.: C04B 26/02, C04B 26/06

(54) **GELZEITSTABILISIERTES RADIKALISCHES KUNSTMÖRTELSYSTEM**

(30) Priorität: 26.05.2024 DE 102024114759; 04.04.2025 DE 102025113351
(71) Anmelder: fischerwerke GmbH & Co. KG, 72178 Waldachtal (DE)
(72) Erfinder: Ankermann, Carmen, 79346 Endingen a.K. (DE); Vogel, Martin, 79183 Waldkirch (DE); Arnold, Julia, 79110 Freiburg (DE); Schlenk, Christian, 79211 Denzlingen (DE)
(74) Vertreter: Suchy, Ulrich Johannes

(57) **Zusammenfassung**

Ein Kunstmörtelsystem auf Basis radikalisch härtbarer Kunstharze, umfassend einen oder mehrere Gelzeitstabilisatoren in Form von Antioxidantien oder Reduktionsmitteln wie Vitamin C oder Estern davon, und darauf basierende Verwendungen, Verfahren und dergleichen wie in Ansprüchen und Beschreibung beschrieben.

## Beschreibung

Die Erfindung betrifft (insbesondere mehrkomponentige) Kunstmörtelsysteme für die Befestigungstechnik im Bauwesen auf Basis radikalisch härtbarer Kunstharze (= Reaktivharze), umfassend bestimmte Gelzeitstabilisatoren, diese Kunstmörtelsysteme für die Anwendung im Bauwesen, insbesondere zur Befestigung von Bauelementen an und/oder in Bausubstraten, wie etwa von Verankerungselementen in Aussparungen oder Löchern von Bausubstraten oder von Bewehrungen in Bausubstraten wie Beton; deren Verwendung im Baubereich, insbesondere zur Befestigung von Verankerungselementen in Aussparungen oder Löchern in Bausubstraten oder von Bewehrungen in Bausubstraten wie Beton; entsprechende Befestigungsverfahren und weitere nachfolgend genannte Erfindungsgegenstände.

Über die Lagerdauer hin verändert sich die Reaktivität von radikalischen Kunstmörteln. Radikalisch aushärtenden Mörtel unterliegen insbesondere einem Offenzeitdrift/Gelierzeitdrift. Dies bedeutet, dass sich über die Lagerzeit die Aushärtungszeit verändert und sich meist verkürzt: Denn bei radikalischen Kunstharzen besteht während der Lagerung die Gefahr einer ungewollten teilweisen Umsetzung, die zur Drift von Eigenschaften wie insbesondere abnehmender Leistungsfähigkeit und vor allem einer Veränderung der Zeit bis zum Aushärten und/oder Gelieren (Gelierzeit) führt, insbesondere zu deren Verkürzung. Dies kann sich in veränderten Offen- und Aushärtezeiten manifestieren und dazu führen, dass die Aushärtungszeiten für eine praktikable Anwendung zu kurz werden (zu kurze Offenzeit, das heißt, zu kurze Zeit, in der die Mischung aus Härter und Reaktivharz noch flüssig genug ist, um verarbeitet werden zu können). Ferner kann es zu - mitunter drastischen - Leistungseinbußen über zunehmende Lagerungszeit hinweg kommen. Besonders ausgeprägt ist dieses Verhalten bei radikalischen Hochleistungsmörteln, deren Aushärtungszeit und oft auch Leistungsfähigkeit über die Lagerzeit und dann insbesondere auch bei tiefen Temperaturen deutlich abnehmen kann. Insbesondere bei Anwendungen als Armierung oder Armierungsanschluss ist, wegen der relativ langen Dauer des Arbeitsvorgangs bei der Armierung (Füllung des Bohrlochs mit Kunstmörtel und Einschieben des Armierungseisens), eine vorzeitige Gelierung aufgrund eines Gelierzeitdrifts besonders negativ - im schlechtesten Fall ist es dann nicht möglich, bei verkürzter Offenzeit das Armierungseisen zu montieren.

Verbindungen wie beispielsweise N-Oxylradikale (siehe z.B. EP 3 034 520 A1), beispielsweise TEMPO oder TEMPOL, Phenothiazine oder Galvinoxylradikale oder auch phenolische Inhibitoren (siehe z.B. EP 3 489 267), beispielsweise nicht-alkylierte oder alkylierte Hydrochinone, wie Hydrochinon, Mono-, Di- oder Trimethylhydrochinon, tert.-Butylhydrochinon, Hydrochinonmonoethylether oder p-Benzochinon, nichtalkylierte oder alkylierte Phenole, wie 4,4'-Methylen-bis(2,6-di-tert-butylphenol), 1,3,5-Trimethyl-2,4,6-tris(3,5-di-tert-butyl-4-hydroxybenzyl)-benzol, nichtalkylierte oder alkylierte Brenzcatechine wie tert.-Butylbrenzcatechin, 3,5-Di-tert-butyl-1,2-benzoldiol oder 4-tert.-Butyl-1,2-benzoldiol, oder 4-Methoxyphenol, ferner Triphenylphosphit, werden als Inhibitoren (oft auch als Stabilisatoren bezeichnet) für radikalisch härtbare Reaktivharze eingesetzt, um die Lagerfähigkeit entsprechender Kunstharzsysteme (= Kunstmörtelsysteme) und für die Verwendung brauchbare Gel(ierungs) zeiten einzustellen. Diese Inhibitoren, insbesondere die Phenole, können jedoch an Hemmwirkung verlieren, was zu den genannten Herausforderungen hinsichtlich der Gelierungszeit, Anwendbarkeit und Leistungsfähigkeit führt.

EP 4 001 327 A1 beschreibt Zweikomponenten-Mörtelmassen, die eine härtbare Harzkomponente und eine getrennt angeordnete Härterkomponente beinhalten, einen phenolischen Inhibitor und einen Gelierzeitstabilisator mit wenigstens einer Säurefunktionalität umfassen. Ein solcher Gelierzeitstabilisator wirkt unter anderem durch Stabilisierung von Inhibitoren, wie sie beispielsweise im vorstehenden Absatz erwähnt sind.

Als Beispiele für solche Gelierzeitstabilisatoren (synonym Gelzeitstabilisatoren) werden difunktionelle organische Säure und/oder wenigstens zweiprotonige anorganische Säure und/oder lösliche Oligomere oder (Co)polymere, die jeweils saure Gruppen, wie Carboxylat- oder Phosphatgruppen, tragen. erwähnt. Spezifisch genannt werden Itakonsäure, Maleinsäure, Zitronensäure, ferner Phosphorsäure, und Kombinationen davon. In Absatz [0018] heißt es, dass den Säuren der Effekt zugeschrieben wird, das Gleichgewicht bei phenolischen Inhibitoren von der oxidationsempfindlicheren Phenolatform in Richtung (undissoziierten) Phenols zu verschieben und so die erhöhte Lagerstabilität zu erzielen.

DE 195 316 49 A1 beschreibt Piperidin-N-oxyl oder Tetrahydopyrrol-N-oxyle als Inhibitoren, EP 1 935 860 A1 Brenzcatechin-Derivate und Piperidin-N-Oxyl für die Einstellung von Reaktivität und Gelzeit, EP 2 532 636 die Verwendung von 3- Pyridinol- und 5-Pyrimidinol-Derivaten zur Einstellung der Reaktivität und Gelzeit und EP 2 532 632 A1 eine Mischung aus 5-Pyrimidinol-Derivaten mit sterisch gehinderten Phenolderivaten zur Einstellung der Reaktivität und Gelzeit - sie beschreiben alternative Möglichkeiten zur Gelierzeitstabilisierung.

EP 2 922 890 B1 und EP 1 935 860 A2 zeigen die Problematik der Gelzeitdrift weiter auf. Die Dokumente sind exemplarisch für den Handlungsbedarf - vor dem Anmeldetag der vorliegenden Anmeldung war dieser immer noch akut gegeben.

Aufgabe der vorliegenden Erfindung ist, driftarme oder insbesondere (mindestens weitgehend) driftfreie radikalisch härtbare Kunstmörtelsysteme auf Basis radikalisch härtbarer Kunstharze und über lange Lagerdauer leistungsfähige derartige Kunstmörtelsysteme bereitzustellen. Insbesondere sollen solche Kunstmörtelsysteme bereitgestellt werden, die für eine hinreichend lange Lagerung und für Systeme mit langer Offen- und Verarbeitungszeit genutzt werden können, bei denen eine Verkürzung der Gelierzeit und/oder eine kurze Gelierzeit (insbesondere von Anwendern) als Mangel wahrgenommen wird.

Es wurde nun gefunden, dass mit bestimmten Gel(ier)zeitstabilisatoren in Form von Antioxidantien oder anderen Reduktionsmitteln, ausgewählt aus Ascorbinsäure (insbesondere deren L- oder (+) Enantiomeres = Vitamin C), einem Ester von Ascorbinsäure mit einer langkettigen (insbesondere C₈- bis C₂₀-) Fettsäure, insbesondere 6-Palmitoyl-L-Ascorbinsäure (nachfolgend auch als Ascorbyl Palmitat bezeichnet), oder ferner (vor allem wenn zusätzlich ein anderer Inhibitor als Triphenylphosphit im Kunstmörtelsystem beinhaltet ist, insbesondere Ascorbinsäure) Triphenylphosphit; oder ferner einem reduzierenden Zucker oder anderen Aldehyd, Natriumsulfit, Natriumdithionit und Natriumthiosulfat; oder Mischungen von zwei oder mehr der genannten Gelzeitstabilisatoren, Kunstmörtelsysteme zugänglich werden, die eine stabilisierte Gelzeit (geringe Gelierzeitdrift) und für die praktische Anwendung geeignete Aushärtungsgeschwindigkeiten aufweisen und die gestellte Aufgabe lösen, insbesondere die Einhaltung zugesagter Offenzeiten ermöglicht und eine Verbesserung, insbesondere Verminderung, der Offenzeitdrift ermöglicht.

Ohne an diese Erklärung gebunden sein zu wollen, könnte eine Erklärung für die gute Wirksamkeit insbesondere von Ascorbinsäure darin bestehen, dass diese recht hydrophile Verbindung im organischen Harzgemisch kaum löslich ist und möglicherweise in dispergierter Form vorliegt, die eine Art Depotfunktion für die Freisetzung des im System kaum löslichen Gelzeitstabilisators bewirkt. In einer bevorzugten Ausführungsform betrifft die Erfindung daher auch die Verwendung eines hydrophilen Gelzeitstabilisators bei allen Ausführungsformen der Erfindung, insbesondere von Vitamin C oder ferner von einem reduzierenden Zucker, einem anderen Aldehyd, Natriumsulfit, Natriumdithionit und Natriumthiosulfat; oder von Mischungen von zwei oder mehr der genannten Gelzeitstabilisatoren; zur Stabilisierung der Gelzeit in einem wie vor- und nachstehend und in den Ansprüchen definierten Kunstmörtelsystem für die Befestigungstechnik.

Besonders bevorzugt als Gelzeitstabilisatoren in allen Ausführungsformen der Erfindung sind Ascorbinsäure (insbesondere deren L- oder (+) Enantiomeres = Vitamin C), oder einem Ester von Ascorbinsäure mit einer langkettigen (insbesondere C₈- bis C₂₀-) Fettsäure, insbesondere 6-Palmitoyl-L-Ascorbinsäure.

Die Gelzeitstabilisatoren ermöglichen eine hohe, langfristige Leistungsfähigkeit von diese beinhaltenden Kunstmörtelsystemen. Insbesondere erlauben sie eine gute Kontrolle der Driftzeit und brauchbare Offenzeiten auch nach längerer Lagerung.

Die Erfindung betrifft daher in einer ersten Ausführungsform ein (vorzugsweise mehrkomponentiges) Kunstmörtelsystem auf Basis eines radikalisch härtbaren Kunstharzes für die Befestigungstechnik im Bauwesen, beinhaltend eine Komponente (eine Reaktivharzkomponente) umfassend ein radikalisch härtbares (= radikalisch polymerisierbares) Reaktivharz und einen oder mehrere Gelzeitstabilisatoren (insbesondere in Form - eines oder mehrerer - Reduktionsmittel oder Antioxidantien) wie oben oder nachstehend definiert.

Bevorzugte Masseanteile für den oder die Gelzeitstabilisatoren liegen in allen Ausführungsformen der Erfindung im Bereich 0,001 bis 1 Gew.-%, vorzugsweise bei 0,01 bis 1 Gew.-%, insbesondere bei 0,01 bis 0,5 Gew.-%, vorteilhaft bei {0,05 oder 0,1} bis {0,2 oder vorzugsweise 0,15}, z.B. bei 0,1 bis 0,15 oder bei 0,1 Gew.%.

Besonders vorteilhaft in einer Variante (i) sind unter die erste Ausführungsform fallende Kunstmörtelsysteme, welche neben mindestens einem Gelzeitstabilisatoren wie oben oder unten genannt außerdem ein oder mehrere Silane, wie vorzugsweise (Meth)acrylsilan (insbesondere Methacryloxyalkyltrialkoxysilan, wie z.B. (insbesondere 3-) Methacryloxypropyltrimethoxysilan), anderer Name Methacryloyloxypropyltrimethoxysilan, beinhalten.

Bevorzugte Konzentrationsbereiche für das oder die Silane, insbesondere in irgendeiner Weise als bevorzugt oder beispielhaft hervorgehobene, liegen bei 0,01 bis 30 Gew.-%, insbesondere bei 0,1 bis 20 Gew.-%, vorzugsweise bei 0,5 -10 Gew.-%.

Ganz besonders bevorzugt sind in einer Variante (ii) unter die erste Ausführungsform der Erfindung, oder beispielsweise unter Variante (i), fallende Kunstmörtelsysteme, die ein oder mehrere Beschleuniger ausgewählt aus tertiären, insbesondere N-hydroxyalkylgruppen-substituierten, aromatischen Aminen, insbesondere ausgewählt aus der Gruppe, die aus epoxyalkylierten Anilinen, Toluidinen oder Xylidinen, wie vorzugsweise propoxyliertem Toluidin, Anilin oder Xylidin, und beispielsweise N,N-bis(hydroxyethyl- oder insbesondere hydroxypropyl)-toluidinen oder -xylidinen, wie N,N-bis(hydroxypropyl- oder hydroxyethyl)-p-toluidin, N,N-Bis(hydroxyethyl- oder hydroxypropyl)-xylidin, oder entsprechenden höher alkoxylierten technischen Produkten, wie vorzugsweise ethoxyliertes p-Toluidin (auch als überethoxyliertes N,N-Dihydroxyethyl-p-toluidin bezeichnet), beinhalten, vorzugsweise in einem Masseanteil von 0,01 bis 2 Gew.-%.

Bevorzugte Konzentrationsbereiche für den oder die Beschleuniger, insbesondere in irgendeiner Weise als bevorzugt oder beispielhaft hervorgehobene(n) Beschleuniger, liegen bei 0,01 bis 8 Gew.-%, bevorzugt 0,05 bis 3 Gew.-%.

Eine besondere Variante in allen Ausführungsformen der Erfindung sind solche Kunstmörtelsysteme (iii), die als Beschleuniger N,N-Bis(2-hydroxypropyl)-p-toluidin und ein oder mehrere Inhibitoren ausgewählt aus 2,4-Dimethyl-6-tert-butylphenol (TBX, am stärksten bevorzugt), 2,2'-Methylen-bis-(6-tert-butyl-4-methylphenol), Ethylen-bis(oxyethylen)-bis-(3-(5-tert-butyl-4-hydroxy-m-tolyl)-propionat) (z.B. Irganox^{®} 245 von BASF; CAS-No. 36443-68-2); und ferner dem p-Kresoldicyclopentadien-isobutylen-Reaktionsprodukt der Formel 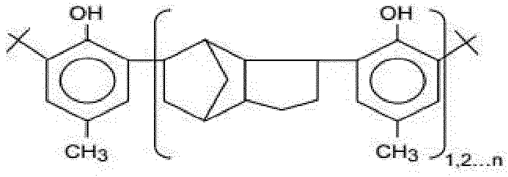 (wobei n beispielsweise 3 bis 20 bedeuten kann) Ralox^{®} LC, nunmehr Ionol^{®} LC; von Raschig, Deutschland; CAS-No. 68610-51-5); beinhalten, und/oder solche, die als Beschleuniger ethoxyliertes p-Toluidin, als Inhibitor 2,2'-Methylen-bis-(6-tert-butyl-4-methylphenol, Ethylen-bi-(oxyethylen)-bis-(3-(5-tert-butyl-4-hydroxy-m-tolyl)-propionat oder insbesondere 2,4-Dimethyl-6-tert-butylphenol und optional ein Silan in Form von 3-Methacryloxypropyltrimethoxysilan beinhalten; wobei vorzugsweise das radikalisch härtbare Reaktivharz ein Urethanmethacrylatharz ist oder insbesondere beinhaltet, beispielsweise jeweils in einem Masseanteil von 0,01 bis 10 Gew.-%.

In einer zweiten Ausführungsform betrifft die Erfindung die Verwendung eines mehr-(insbesondere zwei-)komponentigen Kunstmörtelsystems wie vor- oder nachstehend, insbesondere für die erste Ausführungsform, definiert, insbesondere für Variante (i) und noch bevorzugter für Variante (ii) oder ganz besonders bevorzugt für Variante (iii), in der Befestigungstechnik im Bauwesen, insbesondere zur Befestigung von Verankerungselementen, wie Bolzen oder dergleichen, in einer Aussparung oder einem Loch, insbesondere einem Bohrloch, jeweils in einem Bausubstrat, oder zur Fixierung von Bewehrungselementen in Aussparungen in Beton oder ferner einem anderen Bausubstrat.

In einer dritten Ausführungsform betrifft die Erfindung ein Verfahren zum Verkleben von Gegenständen miteinander, bei dem ein mehr-(insbesondere zwei-)komponentiges Kunstmörtelsystem wie vor- oder nachstehend, insbesondere für die erste Ausführungsform, definiert, insbesondere für Variante (i) und noch bevorzugter für Variante (ii), ) oder ganz besonders bevorzugt für Variante (iii), auf die ganze oder einen Teil einer zu verklebenden Oberfläche eines Gegenstandes oder Substrates aufgetragen oder eingebracht wird und die zu verklebenden Oberflächen der Gegenstände miteinander in Berührung gebracht werden und das Kunstmörtelsystem aushärten gelassen wird.

Vorzugsweise handelt es sich den zu verklebenden Gegenständen um
- ein Verankerungselement und ein Bausubstrat, wobei insbesondere die Komponenten eines wie oben oder nachstehend definierten Kunstmörtelsystems in eine Aussparung oder insbesondere ein (in erster Linie Bohr-) Loch eines Bausubstrates eingebracht werden, gleichzeitig mit oder vor Einbringen eines einzuklebenden Verankerungselementes; oder
- ein Bewehrungselement (= Armierungselement), wobei insbesondere die Komponenten eines wie oben oder nachstehend definierten Kunstmörtelsystems in eine Aussparung eines Bausubstrates, wie insbesondere Beton, eingebracht werden, gleichzeitig mit, nach oder vor Einbringen eines einzuklebenden Bewehrungselements.

Die Erfindung betrifft auch die in den unabhängigen und insbesondere in den abhängigen Ansprüchen genannten Erfindungsgegenstände (= Ausführungsformen der Erfindung), die hier vorzugsweise als in die Beschreibung durch Bezugnahme aufgenommen anzusehen sind.

Die vor- und nachstehend verwendeten Begriffe und Merkmale haben vorzugsweise jeweils die nachfolgend genannten Bedeutungen, wobei ein, mehrere oder alle der entsprechenden Begriffe und/oder Merkmale vorzugsweise durch die nachfolgenden Definitionen spezifiziert werden können, was jeweils zur besonderen Ausführungsformen der Erfindungsgegenstände führt, oder auch eingangs gegebene Definitionen gelten.

Vor- und nachstehend bedeuten Anteils- oder Gehaltsangaben in Prozent jeweils Masseprozent (angegeben als "%" oder als "Gew.-%") oder den relativen Masseanteil, bezogen auf alle Inhaltsstoffe eines erfindungsgemäßen bzw. erfindungsgemäß verwendeten Kunstmörtelsystems (ohne Verpackungsmaterial und Zubehör wie z.B. Statikmischer), wenn nicht anders angegeben oder ersichtlich.

"Beinhalten", "enthalten" oder "umfassen", wie auch "auf Basis", bedeutet, dass neben den genannten Bestandteilen oder Komponenten oder Merkmalen noch andere vorhanden sein können, steht also für eine nicht abschließende Aufzählung, im Gegensatz zu "bestehen aus" oder "bestehend aus", dass eine abschließende Aufzählung der bei seiner Verwendung aufgezählten Bestandteile/Komponenten/Merkmale bedeutet. Vorzugsweise kann anstelle von "beinhalten(d)", "enthalten(d)" oder "umfassen(d)" das Wort "bestehen(d) aus" eingesetzt werden, um so speziellere Erfindungsverkörperungen zu definieren.

Wo von "eine(r) Verbindung", "eine(r) Komponente" oder dergleichen die Rede ist, bedeutet dies, dass eine oder Gemische von zwei oder mehr der danach genannten Verbindungen, Komponenten oder dergleichen vorliegen bzw. verwendet werden können.

Wo das Attribut "ferner" erwähnt wird, bedeutet dies, dass Merkmale, die vor diesem Attribut stehen, stärker bevorzugt sind.

"Und/oder" bedeutet, dass die genannten Merkmale/Substanzen jeweils allein oder in Kombination von zwei oder mehr der jeweils genannten Merkmale/Substanzen vorliegen können.

Radikalisch härtbar bedeutet in der vorliegenden Offenbarung das gleiche wie radikalisch polymerisierbar. Bei der Anwendung kann es auch als "aushärtend" verstanden werden.

"Auf Basis radikalisch härtbarer Kunstharze" bedeutet insbesondere, dass das oder die erfindungsgemäßen, bzw. erfindungsgemäß verwendbaren, Kunstmörtelsysteme mindestens in einer (dann als Reaktivharzkomponente bezeichneten) Komponente ein oder mehrere Reaktivharze in Form von(vorzugsweise unkonjugierte Doppelbindungen aufweisenden) ungesättigten Verbindungen, insbesondere pro Molekül ein oder mehrere olefinische Bindungen aufweisende Reaktivharze beinhalten - auf deren (radikalischer) Polymerisierbarkeit ihre Aushärtbarkeit basiert. Daneben können neben bisher oder nachfolgend genannten Bestandteilen auch weitere Bestandteile (übliche Inhaltsstoffe) beinhaltet sein, z.B. Füllstoffe, Additive oder andere oben oder unten genannte Bestand¬teile) beinhalten können. Diese weiteren Inhaltsstoffe können beispielsweise in einem Massenanteil von insgesamt bis zu 80, vorzugsweise zwi¬schen 0,01 und 65 %, vorliegen.

"Auf Basis" bedeutet insbeson¬dere, dass der betreffende Bestandteil mehr als 50, vorzugsweise mehr als 60, wie mehr als 70 % bis zu jeweils 100 % (Massenanteil bezogen auf den jeweiligen Bestandteil, z.B. "Reaktivharzkomponente" oder "Härterkomponente") der nach "auf Basis von" genannten Stoffe enthält

"(Meth)" oder "(meth)" bedeutet, dass die diesen Wortbestandteil enthaltenden Verbindungen einen Methylrest oder ein Wasserstoffatom tragen, z.B. in "(Meth)acrylate", das für Acrylat oder Methacrylat oder ferner ein Gemisch davon steht.

Alle Ausführungsformen der Erfindung beziehen sich insbesondere auf die Verwendung bzw. ein radikalisch härtbares Kunstmörtelsystem zur Anwendung in der Befestigungstechnik oder im Baubereich, d.h. insbesondere für die Verwendung zur Befestigung von Verankerungselementen, wie Bolzen, Schrauben oder dergleichen, in einer Aussparung oder einem Loch, insbesondere einem Bohrloch, jeweils in einem Bausubstrat, oder zur Befestigung von Bewehrungselementen in einem Bausubstrat, insbesondere von Beton.

Unter Verankerungselementen sind insbesondere solche aus Metall, z.B. Hinterschneidanker, Gewindestangen, Schrauben, Bohranker, Bolzen, oder ferner einem anderen Material, wie Verbundmaterial, Kunststoff oder Holz, zu verstehen.

Unter Bewehrungselementen (= Armierungselementen) sind insbesondere Armierungs- oder Bewehrungsstahl (z.B. Betonstahlmatten oder Stahlstäbe), und ferner Geotextilien oder Glasfasern, Kohlenstoffasern, Kunststofffasern, (ferner Naturfasern, wie z.B. Jutefasern), insbesondere jeweils in Form von Geweben, z.B. Gewebematten, zu verstehen.

"Bausubstrate" sind insbesondere Beton oder Mauerwerk, beispielsweise aus Naturstein, künstlichen Steinen (wie z.B Lehmziegeln, Mauerziegeln, Klinkern, Hohlblocksteinen, Blähbetonblöcken) oder Beton, ferner Bausubstrate aus Holz.

Vorzugsweise sind in allen Ausführungsformen die Zusammensetzungen für die Anwendung ohne Photoaktivierung oder thermische Vernetzung ausgestaltet, das heißt insbesondere für die Reaktion bei Temperaturen im Bereich von -10 bis 50 °C mit einem Härter wie hierin beschrieben.

In einem erfindungsgemäßen oder erfindungsgemäß verwendeten Kunstmörtelsystem auf Basis radikalisch härtender Kunstharze ist eine radikalisch härtbare (=polymerisierbare) Verbindung (was auch eine Mischung solcher Verbindungen bedeuten kann) als Reaktivharz beinhaltet, wobei es sich vorzugsweise um eine ein oder mehrere ungesättigte Gruppen (damit sind nicht-aroma-tische Doppelbindung(en) zwischen Kohlenstoffatomen gemeint) beinhaltende Verbindung, vorzugsweise ein radikalisch härtendes ungesättigtes Reaktionsharz (Reaktivharz) mit bevorzugt mindestens 2 oder mehr reaktiven nicht aromatischen ungesättigten Bindungen, oder eine Mischung von zwei oder mehr derartigen Reaktionsharzen, handelt.

Besonders geeignet ist die Gruppe der ethylenisch ungesättigten Verbindungen, die Styrol und Derivate; oder insbesondere Vinylester, wie (Meth)Acrylate, Urethan(meth)acrylate oder Itaconate, oder Epoxy(meth)acrylate; ferner ungesättigte Polyester, Vinylether, Allylether, Dicyclopentadien-Verbindungen und ungesättigte Fette, umfasst.

Besonders bevorzugt sind vor allem ein oder mehrere solche Reaktivharze, die (radikalisch) härtbare Ester mit ein oder mehreren ungesättigten Carbonsäureresten (wie beispielsweise in DE 10 2014 103 923 A1 beschrieben) umfassen; vorzugsweise jeweils propoxylierte oder insbesondere ethoxylierte aroma-tische Diol-, wie Bis¬phenol-A-, Bisphenol-F- oder Novolak-(insbesondere di-) (meth)acrylate; Epoxy(meth)acrylate, insbesondere in Form von Umsetzungsprodukten von Di- oder Poly-epoxiden, z.B. Bisphenol-A-, Bisphenol-F- oder Novolakdi- und/ oder -poly-glycidylethern, mit ungesättigten Carbonsäuren, z.B. C2-C7-Alkencarbonsäuren, wie insbesondere (Meth)acrylsäure; Urethan- und/oder Harnstoff(meth)-acrylate, insbesondere Urethan(meth)acry¬late (besonders bevorzugt) (auch als "Vinylesterurethane" bezeichnet), die z.B. durch Umsetzung von Di- und/oder Polyisocyanaten (höherfunktionelle Isocyanate) mit geeigneten (Meth)Acrylverbindungen (wie z.B. Hydroxyethyl- oder Hydroxypropylmethacrylat), gegebenenfalls unter Mitwirkung von Hydroxyverbindungen, die mindestens zwei Hydroxylgruppen enthalten, wie sie beispielsweise in der DE 39 40 309 A1 und/oder DE 41 11 828 A1 beschrieben sind, erhalten werden; oder ferner ungesättigte Polyesterharze, oder dergleichen, oder zwei oder mehr dieser härtbaren ungesättigten organischen Bestandteile.

In besonderen und bevorzugten Ausführungsformen der Erfindung beinhaltete Urethan(meth)acrylate in radikalisch härtbaren Reaktivharzen auf Urethan(meth)acrylatbasis in erfindungsgemäßen Kunstmörtelsystemen sind solche, die aus der Umsetzung eines vorverlängerten monomeren Di- oder Polyisocyanats und/oder aus der Umsetzung eines monomeren oder polymeren Di- oder Polyisocyanats (z.B.: PMDI, MDI) mit Hydroxyalkyl(meth)acrylat, wie Hydroxyethyl- oder Hydroxypropyl(meth)acrylat, resultieren. Die Art und Weise zur Durchführung von Vorverlängerungsreaktionen und die Vielzahl der Vorverlängerungsreaktionsmöglichkeiten sind dem Fachmann bekannt und werden hier nicht alle explizit beschrieben. Es sei hier beispielhaft auf die Anmeldungen EP 0508183 A1 und EP 0432087 A1 oder insbesondere WO 2022/197190 A1 verwiesen.

Beispiele für (in allen Erfindungsvarianten besonders bevorzugte) Urethan(meth)acrylate sind auch in WO 2022/002567 A1 (insbesondere auf den Seiten 9, zweitletzter Absatz, bis Seite 13, zweitletzter Absatz) und EP 3 000 792 A1 (hier insbesondere Beispiel 2) genannt.

Beispiele für in besonderen Ausführungsformen der Erfindung vorhandene bzw. verwendete in allen Ausführungsformen der Erfindung besonders bevorzugte Epoxy(meth)acrylate sind solche der Formel 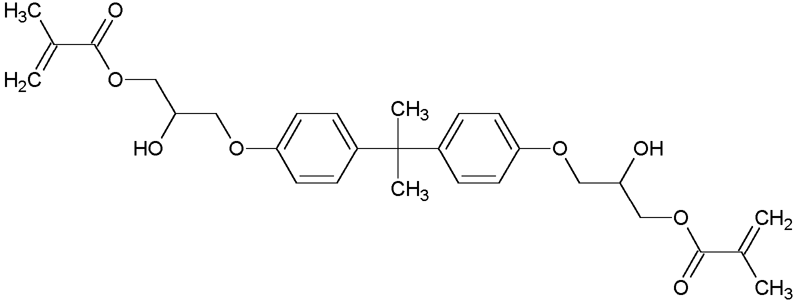 oder allgemeiner unter Berücksichtigung der Vorverlängerungsreaktion bei der Herstellung des Bisphenol-A-diglycidylethers der Formel 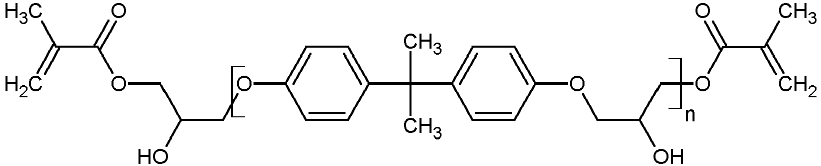 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden hier unter dem Begriff "Vinylester" subsumiert.

Beispiele für in besonderen Ausführungsformen der Erfindung vorhandene bzw. verwendete in allen Ausführungsformen der Erfindung besonders bevorzugte propoxylierte oder insbesondere ethoxylierte aromatische Diol-, wie Bisphenol-A-, Bisphenol-F- oder Novolak-(insbesondere di-) (meth)acrylate, sind vorzugsweise solche der Formel 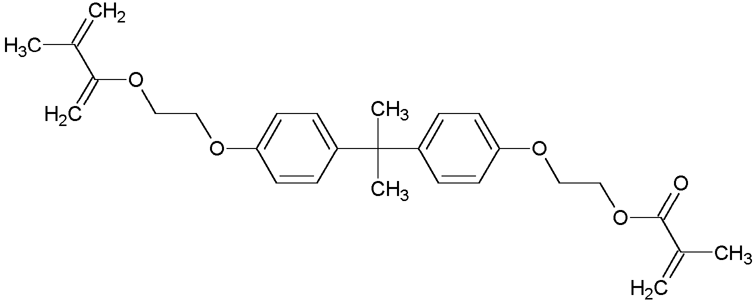 oder allgemein noch unter Berücksichtigung höherer Ethoxylierungsgrade: 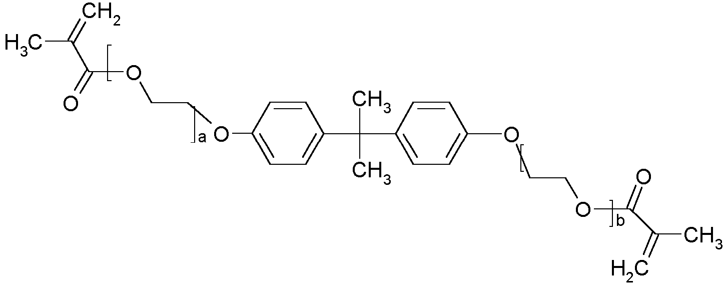 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen). Im Falle der propoxylierten Verbindungen stehen in obigen Formeln anstelle der bivalenten Reste (-O-(CH₂)-(CH₂))_{(a oder b)} - solche der Formeln (-O-(CH(CH₃)-(CH₂))ₚ- oder (-O-(CH₂)-(CH(CH₃)))ₚ-, wobei p (für jede Seite des Moleküls unabhängig) eine der gerade für a oder b definierten Bedeutungen hat. Die Zahlen a, b und p sind vorzugsweise Mittelwerte von maximal 20, insbesondere von maximal 10 Einzelwerten.

Auch diese propoxylierten oder insbesondere ethoxylierten Verbindungen werden vor- und nachstehend unter dem Begriff "Vinylester" subsumiert.

Diese oder Urethan(meth)acrylate sind in allen Ausführungsformen der Erfindung besonders bevorzugt.

Beispiele für in besonderen Ausführungsformen der Erfindung vorhandene bzw. verwendete Urethan(meth)acrylate sind solche, die einerseits aus der Umsetzung eines vorverlängerten Di- oder Polyisocyanats und/oder andererseits aus der direkten Umsetzung eines Di- oder Polyisocyanats (z.B.: PMDI, und/oder MDI) mit Hydroxyethyl- oder Hydroxypropyl(meth)acrylat resultieren. Das Di- oder Polyisocyanat kann jeweils monomerer, oligomerer und/oder polymerer Struktur sein. Die Art und Weise zur Durchführung von Vorver-längerungsreaktionen und die Vielzahl der Vorverlängerungsreaktionsmöglichkeiten sind dem Fachmann bekannt und werden hier nicht explizit beschrieben, bevorzugte Varianten finden sich in den oben bei der Definition von Urethan(meth)acrylaten erwähnten Dokumenten.

Vorzugsweise ist als einziges radikalisch härtbares Kunstharz (Reaktivharz) ein Urethan(meth)acrylat vorhanden. Die jeweiligen Methacrylate sind bevorzugt.

Der Gewichtsanteil dieses oder dieser Reaktivharze liegt in allen Ausführungsformen der Erfindung vorzugsweise im Bereich von 0,1 bis 90 Gew.-%, z.B. zwischen 0,5 und 75 Gew.-% oder zwischen 1 und 40 Gew.-% oder insbesondere von 15 bis 60, beispielsweise 20 bis 50 Gew.-%.

Die erfindungsgemäßen bzw. erfindungsgemäß verwendeten Kunstmörtelsysteme können weitere Inhaltsstoffe beinhalten.

Wichtige Beispiele für weitere (insbesondere im Befestigungsbereich übliche) Inhaltsstoffe sind ein oder mehrere ausgewählt aus Beschleunigern, weitere Inhibitoren, reaktiven Verdünnern, Thixotropiermitteln, Füllstoffen und/oder weiteren Additiven.

Als Beschleuniger kommen solche mit hinreichend hoher Aktivität in Frage, insbesondere wie oben genannt. Ein oder mehrere derartige Beschleuniger sind möglich. Die Be¬schleuniger haben, vorzugsweise einen Anteil (Kon¬zentration) von 0,005 bis 10, insbesondere von 0,01 bis 5 Gew.-%.

Vorteilhaft können erfindungsgemäße Kunstmörtelsysteme auch ein oder mehrere Silane beinhalten, was zu besonders guter Leistungsfähigkeit führen kann, insbesondere ein oder mehrere Silane mit nichtaromatischen ungesättigten C=C Doppelbindungen, die bei der radikalischen Aushärtung mitreagieren können.

Ein oder mehrere derartige Silane können ausgewählt sein aus solchen ausgewählt aus (Meth)acryloyl-Reste umfassenden Silanen, beispielsweise (Meth)acrylsilan(en), vorzugsweise (insbesondere 3-) (Meth)acryloyl-oxyalkyltrialkoxysilan(en), wie (Meth)acryloyloxymethyltrimethoxysilan oder -triethoxysilan, 3-(Meth)acryloyl-oxypropyltrimethoxysilan oder 3-(Meth)acryloyl-oxypropyltriethoxysilan, 3-(Meth)acryloyl-oxy-propylmethyldimethoxysilan oder -diethoxysilan, und aus Alkenyloxysilanen, wie Vinyltrimethoxysilan, Vinyltriethoxysilan, Vinyltriacetoxysilan oder Vinyltri(methoxyethoxy)silan, oder ferner Vinyltrichlorsilan.

Auch Füllstoffe können ferner oder vorteilhaft silanisiert sein, beispielsweise als methacrylsilanbehandeltes Quarzmehl, wie Silbond MST^{®} der Fa. Quarzwerke GmbH, als methacrylsilanbehandelte Kieselerde, wie Aktisil MAM^{®} von Hoffmann Mineral (Neuburg, Deutschland), oder methacryloxypropyltrimethoxysilan-behandelte pyrogene Kieselsäure, wie Aerosil R 711^{®} von Evonik.

Als Thixotropiermittel können übliche thixotropieverursachende Rheologiehilfsmittel verwendet werden, wie pyrogene Kieselsäure, Bentonite, Alkyl- und Methylcellulosen, Rizinusölderivate oder dergleichen, z.B. in einem Gewichtsanteil von 0,01 bis 50 Gew.-%, beispielsweise von 0,1 bis 5 Gew.-%.

Auch weitere Additive können zugesetzt sein, wie Weichmacher, nicht reaktive Verdünnungsmittel, weitere Silane, Flexibilisatoren (wie insbesondere Lösungsmittel), Stabilisatoren, Antistatikmittel, Verdickungsmittel, Härtungskatalysatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Ein oder mehrere solche Additive können z.B. insgesamt in Gewichtsanteilen von insgesamt 0 bis 90 Gew.-%, beispielsweise von 0 bis 40 Gew.-%, zugesetzt sein. Sie können in einzelnen oder mehreren Komponenten der erfindungsgemäßen oder erfindungsgemäß verwendeten Kunstmörtelsysteme in dem Fachmann ersichtlicher und bekannter Weise zugesetzt sein.

Als Reaktivverdünner für radikalisch härtende Reaktionsharze können zusätzlich auch ein oder mehrere niedrigviskose radikalisch polymerisierbare Verbindungen zugesetzt sein, wie beispielsweise (Meth)acrylate, wie solche der Formel H₂C=C[-H oder -CH_{3]}-C(=O)-OX, worin X ein gegebenenfalls substituierter oder mehrfach substituierter Alkylrest ist, wie (z.B. 2-) Hydroxypropyl(meth)acrylat oder Hydroxyethyl(meth)acrylat, Mono-, Di-, Tri-, Tetra-, Penta-, Hexa- oder Poly(meth)acrylate, wie 1,3- oder insbesondere 1,4-Butandioldi(meth)acrylat, Hexandioldi(meth)acrylat, Ethylenglykoldimethacrylate wie 1,2-Ethandioldi(meth)acrylat, Diethylenglykoldimethacrylat, Triethylenglykoltrimethacrylat, Tetraethylenglykoldimethacrylat, PEG200DMA, PEG400DMA und höhere Polyethylenglykoldi(meth)acrylate, oder dergleichen, Trimethylol-propantri(meth)acrylat, Glycerintri(meth)acrylat, Polyglycerinpoly(meth)acrylat, Cycloalkyl-, Bicycloalkyl- oder Heterocycloalkyl(meth)acrylate, wie Tetrahydrofurfuryl(meth)acrylat oder Isobornyl-(meth)acrylat, oder Acetoacetoxyalkyl(meth)acrylat, oder ferner Styrole, wie Styrol, α-Methylstyrol, Vinyltoluol, tert.-Butylstyrol und/ oder Divinylbenzol, oder Gemische von zwei oder mehr davon, als in dem radikalisch härtenden ungesättigten Reaktionsharz parallel aushärtende Bestandteile vorgesehen sein. Der oder die Reaktivverdünner sind beispielsweise in einem Gewichtsanteil von 0,1 bis 90 Gew.-%, z.B. zwischen 0,5 und 60 Gew.-% oder zwischen 0,95 und 20 Gew.-%, zugesetzt.

Für ein erfindungsgemäßes bzw. erfindungsgemäß verwendetes Kunstmörtelsystem bedarf es als eines Anteils oder insbesondere einer Komponente eines Härters. Der Härter (vorzugsweise als Härterkomponente bezeichnet) beinhaltet mindestens einen Radikalstarter als eigentlichen Initiator (Härter im engeren Sinne). Der Begriff "Härter" bedeutet dabei vorzugsweise vor- und nachstehend genannte reine Initiatoren oder phlegmatisierte Initiatoren mit oder ohne Füllstoffzusatz und/ oder weitere Zusätze, wie Verdickungsmittel und/oder weitere Zusatzstoffe, wie Farbstoffe, Additive und dergleichen, mit anderen Worten, eine komplette Härterkomponente. Zur Phlegmatisierung können übliche Zusätze, wie Gips, Kreide, Ethylenglykoldibenzoat, Wasser, pyrogene Kieselsäure, Phthalate, Chlorparaffin oder dergleichen, zugesetzt sein. Daneben können auch noch Verdickungsmittel, Füllstoffe (wie z.B. oben genannt) und weitere der oben genannten Zusätze, ferner (insbesondere zur Herstellung einer Paste oder Emulsion) Lösungsmittel, wie Wasser, zugesetzt sein. Der Anteil aller Zusätze kann beispielsweise bei einem Masseanteil von insgesamt 0,1 bis 70 Gew.-%, z.B. von 1 bis 40 Gew.-%, liegen.

Bezogen auf die Härterkomponente liegt der Anteil des Initiators (Radikalbildners zum Start einer radikalischen Kettenreaktion) in einer möglichen bevorzugten Ausführungsform der Erfindung bei 0,1 bis 90 Gew.-%, insbesondere bei 0,5 bis 50 Gew.-%, insbesondere 0,9 bis 10 %. In einer besonders bevorzugten Ausführungsform liegt der Anteil des Initiators bezogen auf die Härterkomponente und/oder das Gesamtsystem bei < 5 %, insbesondere bei < 1 %.

Als Initiator für die Härtung der erfindungsgemäßen Kunstmörtelsysteme finden beispielsweise radikalbildende Peroxide, z.B. organische Peroxide, wie Diacylperoxide, z.B. insbesondere Dibenzoylperoxid, Ketonperoxide, wie Methylethylketonperoxid oder Cyclohexanonperoxid, oder Alkylperester, wie tert-Butylperbenzoat, oder ferner Azoinitiatoren oder anorganische Peroxide, wie Persulfate oder Perborate, sowie Mischungen davon Verwendung.

Der Anteil des Härters (Härterkomponente) an einem erfindungsgemäßen Kunstharz-Befestigungssystem insgesamt liegt dabei vorzugsweise in einem Bereich von 0,2 bis 60 Gew.-%, z.B. 0,5 bis 50 Gew.-%, insbesondere bei 1 bis 30 Gew.-%.

Alternativ kann für die Härtung der erfindungsgemäßen Reaktiv-Kunstharzformulierungen ein thiolbasiertes Härtersystem gemäß der Patentanmeldung DE 10 2013 114 061 A1 oder ein auf CH-aciden Verbindungen basiertes System wie in DE 10 2015 003 221 A1 beschrieben verwendet werden, die hier diesbezüglich durch Bezugnahme aufgenommen werden. Ein weiteres Härtersystem (Initiatorsystem) ist ein solches umfassend mindestens einen mindestens einen Aktivator in Form eines Metallsalzes und als Radikalstarter einen solchen auf der Basis von Aldehyden oder Ketonen jeweils in Kombination mit Aminen, oder auf der Basis von Aldiminen oder Ketiminen, das insbesondere in den Patentanmeldungen WO2016/206777 A1 und WO2022/002567 A1, die hier ebenfalls durch Bezugnahme aufgenommen werden, näher beschrieben ist.

Füllstoffe können in einer oder bei Mehrkomponenten-Kunstmörtelsystemen in mehreren Komponenten, beispielsweise in Form eines Mehrkomponentenkits, enthalten sein. Ihr Anteil beträgt vorzugsweise 0 bis 80 Gew.-%, beispielsweise 5 bis 80, z.B. 40 bis 70 Gew.-%.

Als Füllstoffe finden übliche Füllstoffe, z.B. hydraulisch härtbare Füllstoffe, wie Gips, Branntkalk, Wassergläser oder insbesondere Zemente, wie Portlandzement oder Tonerdeschmelzzemente; mineralische oder mineralähnliche Füllstoffe, wie Kreiden, Sand, Gesteinsmehle, Quarz, Glas, Porzellan, Keramik, Silikate, Tone, Schwerspat, Aluminiumoxide oder -hydroxide, wie Korund, oder dergleichen, die als Pulver, in körniger Form, als Mehle oder in Form von Formkörpern zugesetzt sein können, Verwendung, oder andere, wie beispielsweise in WO 02/079341 und WO 02/079293 genannt, oder Mischungen von zwei oder mehr davon; wobei die Füllstoffe ferner oder insbesondere auch wie bereits erwähnt oder anderweitig silanisiert sein können. Um den CO₂-Fußabdruck bzw. die CO₂-Bilanz des Kunstharz-Befestigungssystems zu verbessern, können als Füllstoffe auch pulverisierte (z.B. gemahlene) Recyclingmaterialien aus Abfallprodukten eingesetzt werden. Vorzugsweise ist der Recyclingfüllstoff ausgewählt aus der Gruppe bestehend aus Beton, Ziegelsteinen, Kalksandsteinen, Natursteinen, Flugasche, Gummi, Altplastik, Altglas und evtl. bei der Aufbereitung des Recyclingfüllstoffs anwesenden ausgehärteten chemischen Kunstharz-Befestigungssystems.

Die erfindungsgemäßen bzw. erfindungsgemäß verwendeten Kunstmörtelsysteme können als Ein- oder vorzugsweise als Mehr(insbesondere Zwei)-komponentensysteme formuliert sein, beispielsweise in Form von Mehrkomponenten- oder insbesondere Zweikomponentenkits (umfassend eine Reaktivharzkomponente und eine Härterkomponente).

Unter einem Mehrkomponentenkit ist insbesondere ein Zwei- oder (ferner) Mehrkomponentenkit (vorzugsweise ein Zweikomponentenkit) mit einer Komponente (A), welche ein oder mehrere radikalisch härtbare Kunstharze (Reaktivharze) beinhaltet, wie oben und nachfolgend beschrieben, und einen jeweils zugehörigen Härter als Härterkomponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten derart enthalten sind, dass ihre Bestandteile während der Lagerung vor der Anwendung nicht miteinander in Berührung kommen, das es jedoch ermöglicht, die Komponenten (A) und (B) und gegebenenfalls weitere Komponenten zum Aufbringen auf oder Einbringen in mindestens eine zu verklebende Oberfläche von Gegenständen oder zur Befestigung an der gewünschten Stelle, beispielsweise im Falle eines Verankerungselements direkt vor oder in eine Aussparung oder ein Loch, insbesondere in einem Bohrloch, oder im Falle der Befestigung eines Bewehrungselements auf ein Bausubstrat oder in eine Aussparung desselben, so zu vermischen und erforderlichenfalls einzubringen, dass dort die Härtungsreaktion zur Aushärtung stattfinden kann, um so Gegenstände miteinander zu verkleben oder ein Verankerungselement oder ein Bewehrungselement zu befestigen. Auch geeignet sind Patronen, beispielsweise ineinander verschachtelte Patronen, wie (insbesondere Mehr- wie Zweikammer-) Ampullen; oder insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Kunstmörtelsystems mit oben und nachstehend genannten Zusammensetzungen zur Aufbewahrung vor der Nutzung enthalten sind, wobei vorzugsweise auch ein Statikmischer zum entsprechenden Kit gehört. Alternativ können die vorliegenden Kunstmörtelsysteme in zwei- oder mehrkammrigen Folienbeuteln untergebracht sein, wobei die Komponenten außerhalb oder bei Vorliegen von durch mechanische Einwirkung, wie Walken, öffenbaren vorgesehenen Sollbruchbereichen innerhalb des jeweiligen Folienbeutels miteinander gemischt werden können und durch eine Öffnung nach außen auf oder in das zu verklebende Substrat eingebracht werden können.

In allen Ausführungsformen der Erfindung liegt bei zweikomponentigen Kunstmörtelsystemen das Volumenverhältnis der Komponente (A), welche ein oder mehrere radikalisch härtbare Kunstharze (Reaktivharze) beinhaltet, und eine Härterkomponente (B) ((A) : (B)) vorzugsweise im Bereich von 15 : 1 bis 1 : 5, insbesondere von 12 : 1 bis 1 : 2, stärker vorzugsweise von 10 : 1 bis 3 : 1 oder 2 : 1.

### Beispiele:

Die nachfolgenden Beispiele dienen der Illustration der Erfindung, ohne ihren Umfang einzuschränken, stellen jedoch selbst auch bevorzugte Erfindungsgegenstände dar.

Die nachfolgend beschriebenen Bestimmungsmethoden für die Ermittlung von Parametern, insbesondere Auszugsversuche und Bestimmungen der Gel(ier)zeit, sind auch für den allgemeinen Teil der Beschreibung gültig.

Zur Herstellung der Mörtelkomponenten wurden die jeweiligen Rohstoffe in einem Speedmixer gemischt.

### Beispiel 1 (Erfindungsgemäße Systeme und Referenzbeispiel):

Mörtel A: Die Reaktivharz-Komponente A1 folgender Zusammensetzung wurde hergestellt:

**Tabelle 1 Reaktivharzkomponente A1**

| Rohstoff | Funktion | Einwaage [Gew.-%] |
|---|---|---|
| Urethanmethacrylatharz gemäß Beispiel 2 aus EP 3 000 792 A1 | Reaktionsharz | 35,00 |
| t-Butylbrenzcatechin | Inhibitor | 0,010 |
| Vitamin C = L(+)-Ascorbinsäure (zugesetzt als Pulver) | Gelzeitdriftstabilisator | 0,10 |
| Ethoxyliertes p-Toluidin (N,N-Di-(2-hydroxyethyl)-p-toluidin) | Beschleuniger | 0,50 |
| Portlandzement | Hydraulischer Füllstoff | 18,00 |
| Quarzsand | Füllstoff | 43, 49 |
| Oberflächenbehandelte pyrogene Kieselsäure | Rheologieadditiv | 2,50 |
| Titandioxid | Pigment | 0,40 |
| Summe: | | 100,00 |

Zur Härtung wurde eine wie folgt zusammengesetzte Härterkomponente (B1) verwendet:

| Rohstoff | Anteil (Gew.-%) |
|---|---|
| Wasser demineralisiert | 30 |
| Phlegmatisiertes Dibenzoylperoxid (33 Gew-%) | 42 |
| Quarzsand | 36, 5 |
| Additive und Verdicker | 1,5 |
| | |
| Summe | 100 |

Folgende alternative Gelzeitdriftstabilisatoren wurden anstelle von Vitamin C in der angegebenen Menge bei ansonsten gleicher Zusammensetzung oder geänderter Zusammensetzung wie unten angegeben verwendet:

**Tabelle 2 Weitere Mörtel**

| Mörtel | Inhibitor (Menge in Gew.-%, bezogen auf die jeweilige Reaktivharzkomponente B1, C1, D1 und Ref.) | Erfindungsgemäß |
|---|---|---|
| B | Ascorbylpalmitat (0,1 Gew.-%), gelöst in HPMA | Ja |
| C | Triphenylphosphit (0,1 Gew.-%) | Ja |
| D | Triphenylphosphit (0,15 Gew.-%)² | Ja |
| Ref. | | Referenz¹ |

| | | |
|---|---|---|
| ¹)Hier ist gegenüber Tabelle 1 die Menge an Quarzsand auf 43,59 Gew.-% erhöht, ansonsten sind alle Rohstoffe und ihre Mengen identisch wie für Mörtel A. ²) Hier ist die Menge an Quarzsand gegenüber Mörtel A auf 43,44 Gew.-% verringert, die übrigen Rohstoffe und ihre Mengen sind unverändert. Generell wird in den Beispielen die Menge an Quarzsand im Referenzbeispiel kompensatorisch um die Menge an gegenüber diesem hinzugefügtem Stabilisator vermindert (hier → 43,59 - 0,15 = 43,44 w%). HPMA = Hydroxypropylmethacylat. | | |

Die Gelierzeiten der Mörtel wurden stets bei 23 °C bestimmt. Die erste Gelierzeitbestimmung erfolgt sofort nach Herstellung (frisch) und die weiteren Bestimmungen nach Lagerung bei 23 °C oder 40 °C. Die Bestimmung wurde durchgeführt, indem 50 g Mörtel mit 5 g Härter unter Verwendung eines Holzspatels innig vermischt wurde und die Zeit bis zur Verfestigung (der Zeitpunkt, an dem sich der Holzspatel nicht mehr in Ansatz bewegen lässt) gemessen wurde.

Es wurden folgende Ergebnisse erhalten (siehe nächste Seite):

**Tabelle 3 Gelzeitdrift nach Lagerung bei 23 °C**

| LagerungsZeit (d) | Mörtel B | Mörtel A | Mörtel C | Mörtel D | Referenz |
|---|---|---|---|---|---|
| 0 | 8,25 | 7,75 | 9 | 9,3 | 7,75 |
| 300 | 7, 9 | 7,5 | 5, 8 | 13,2 | 4,35 |
| 500 | 7,2 | 7,25 | 2,1 | 14, 8 | 3,5 |
| 700 | 6,15 | 7,2 | 1,75 | - | 2, 8 |
| 900 | 5,45 | 8,55 | 1,25 | - | 2 |
| 1100 | 3,55 | 6,75 | - | - | 1,5 |
| 1300 | - | 6,75 | - | - | 1,4 |
| 1500 | - | 7,4 | - | - | 1,2 |

**Tabelle 4 Gelzeitdrift nach Lagerung bei 40°C**

| LagerungsZeit (d) | Mörtel B | Mörtel A | Mörtel C | Mörtel D | Referenz |
|---|---|---|---|---|---|
| 0 | 8,25 | 7,75 | 9 | 9,3 | 7,75 |
| 300 | 5,5 | 7,5 | 1,9 | 7,5 | 2,1 |
| 500 | 3,25 | 7,25 | 1,1 | 5,1 | 1 |
| 700 | 2 | 6,45 | 1,2 | - | 0.7 |
| 900 | 1,45 | 4,75 | 1,2 | - | 0,75 |
| 1100 | 1 | 3,55 | - | - | 0,75 |
| 1300 | - | 3 | - | - | 0,7 |
| 1500 | - | 2,25 | - | - | 0,75 |

Es zeigt sich, dass, bei gleicher Konzentration, in abnehmender Wirksamkeit gegen Gelierzeitverkürzung, mit Vitamin C und Ascorbyl Palmitat sowohl bei Raumtemperatur als auch bei 40 °C die Gelierzeitabnahme verringert wurde, also die Gelierzeit stabilisiert wurde.

Mit 0,15 Gew.-% Triphenylphosphit wurde bei Raumtemperatur eine Verlängerung der Gelierzeit gefunden, also ebenfalls keine Verkürzung der Gelierzeit, bei 40 °C eine Verringerung der Abnahme der Gelierzeit (Verminderung der Gelzeitdrift).

(L)-Ascorbinsäure hat die Formel

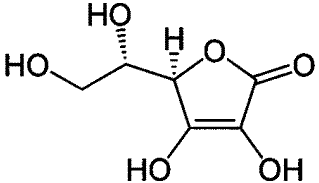

Ascorbyl Palmitat hat die Formel:

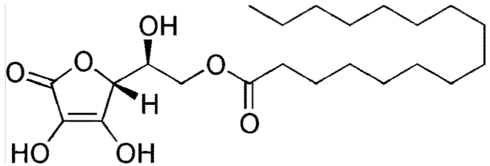

### Beispiel 2: Auszugswerte für Gewindestangen

### Auszugsversuche aus Beton / Bestimmung der Lastwerte

Für Auszugsversuche mit Gewindestangen M12 und zur Bestimmung der Lastwerte der erfindungsgemäßen Kunstmörtelsysteme für die Befestigungstechnik und ggf. der Referenzen wird, in Anlehnung an den EAD330499-02-0601 (am Prioritätsanmeldetag gültige Version), wie folgt vorgegangen:
Zur Bestimmung der Lastwerte der ausgehärteten Massen verwendet man eine Gewindestange M12, die in ein Bohrloch in Beton mit einem Durchmesser von 14 mm und einer Bohrlochtiefe von 84 mm mit dem erfindungsgemäßen Kunstharz-Befestigungssystem eingedübelt wird. Man ermittelt die mittlere Versagenslast durch zentrisches Ausziehen der Gewindestange mit enger Abstützung unter Verwendung hochfester Gewindestangen. Es werden jeweils 5 Gewindestangen eingedübelt und nach 24 Stunden Aushärtung bei Raumtemperatur ihre Lastwerte bestimmt. Die Lastwerte wurden unter Standardbedingungen (trockenes, gereinigtes Bohrloch (R1) (Ausblasen mit Handausbläser (2x), Bürsten mit Drahtbürste (2x), Ausblasen mit Handausbläser (2x)) bestimmt. Bei den hierbei ermittelten Lastwerten handelt es sich um den Mittelwert von 5 Einzelmessungen.

### Auszugsversuche:

| Kunstmörtel | MPa (N/mm²) |
|---|---|
| Mörtel mit 0,1 w% Ascorbyl Palmitat (gelöst in HPMA) (Mörtel B aus Beispiel 1) | 21,3 |
| Mörtel mit 0,1 w% Vit C (Pulverzugabe) (Mörtel A aus Beispiel 1) | 23,8 |
| Mörtel mit 0,1 w% Triphenylphosphit (Mörtel C aus Beispiel 1) | 23,9 |
| Mörtel mit 0,15 w% Triphenylphosphit (Mörtel D aus Beispiel 1) | 20,7 |
| Referenz aus Beispiel 1 (ohne Zusatz) | 23,2 |

Es werden mit der Referenz ohne Gelzeitstabilisator vergleichbare Auszugswerte gefunden wie in Gegenwart des jeweils genannten Gelzeitstabilisators, mit 0,1 Gew.-% Vitamin C und 0,1 Gew.-% Triphenylphosphin sogar tendenziell erhöhte Auszugswerte.

### Beispiel 3: Beispiel für Anschlussarmierung:

Auf einen Statikmischer (z.B**.** FIS MR Plus) wird ein geeigneter Verlängerungsschlauch und eine passende Injektionshilfe aufgesetzt. Die Injektionshilfe wird bis zum Bohrlochgrund ein das Bohrloch eingesetzt und der jeweilige Kunstmörtel injiziert. Während des Verfüllvorgangs wird ermöglicht, dass die Injektionshilfe durch den Druck des eingespritzten Mörtels ohne aktives Herausziehen aus dem Bohrloch herausgedrückt wird. Das Bohrloch wird zu 2/3 mit Mörtel verfüllt, um sicher zu stellen, dass der Ringspalt zwischen Bewehrungsanker (oder Betonstahl) und Beton über die gesamte Einbindetiefe vollständig verfüllt wird. Verfüllen, bis die Mörtelmengenmarkierung sichtbar wird.

Der Bewehrungsanker (oder Betonstahl) wird in das verfüllte Bohrloch bis zur Setztiefenmarkierung eingeführt. Der Setzvorgang kann durch hin und her drehende Bewegungen des Bewehrungsankers (oder Betonstahls) erleichtert werden.

## Patentansprüche

1. Ein Kunstmörtelsystem für die Befestigungstechnik im Bauwesen auf Basis radikalisch härtbarer Kunstharze, umfassend einen oder mehrere Gelzeitstabilisatoren ausgewählt aus Ascorbinsäure, einem Ester von Ascorbinsäure mit einer langkettigen Fettsäure, Triphenylphosphit, ferner einem reduzierenden Zucker oder anderen Aldehyd, Natriumsulfit, Natriumdithionit und Natriumthiosulfat, oder Mischungen von zwei oder mehr der genannten Gelzeitstabilisatoren.

2. Ein Kunstmörtelsystem nach Anspruch 1, wobei der der oder die Gelzeitstabilisatoren aus Vitamin C und Ascorbyl Palmitat, oder Mischungen davon, ausgewählt ist oder sind.

3. Ein Kunstmörtelsystem nach Anspruch 1, wobei der der oder die Gelzeitstabilisatoren Triphenylphosphit ist.

4. Ein Kunstmörtelsystem nach einem der Ansprüche 1 bis 3, **dadurch gekennzeichnet, dass** es ein Mehr-, insbesondere Zweikomponentenkit ist, welches mindestens eine Reaktivharzkomponente und mindestens eine Härterkomponente beinhaltet.

5. Ein Kunstmörtelsystem nach einem der vorstehenden Ansprüche, **dadurch gekennzeichnet, dass** der Massenanteil des oder der Gelzeitstabilisatoren, bezogen auf alle Inhaltsstoffe des Kunstmörtelsystems, bei 0,001 bis 1 Gew.-%, insbesondere bei 0,01 bis 0,5 Gew.-%, z.B. bei {0,05 oder 0,1} bis 0,15 Gew.%, insbesondere bei 0,1 Gew.-%, liegt.

6. Ein Kunstmörtelsystem nach einem der vorstehenden Ansprüche, **dadurch gekennzeichnet, dass** es einen Beschleuniger, insbesondere ausgewählt aus tertiären, insbesondere N-hydroxyalkylgruppen-substituierten, aromatischen Aminen, insbesondere ausgewählt aus der Gruppe, die aus epoxyalkylierten Anilinen, Toluidinen oder Xylidinen, wie vorzugsweise propoxyliertem Toluidin, Anilin oder Xylidin, und beispielsweise N,N-bis(hydroxyethyl- oder insbesondere hydroxypropyl)-toluidinen oder -xylidinen, wie N,N-bis(hydroxypropyl- oder hydroxyethyl)-p-toluidin, N,N-Bis(hydroxyethyl- oder hydroxypropyl)-xylidin, oder entsprechenden höher alkoxylierten technischen Produkten, wie vorzugsweise ethoxyliertem p-Toluidin - auch als überethoxyliertes N,N-Dihydroxyethyl-p-toluidin bezeichnet - ausgewählt ist.

7. Ein Kunstmörtelystem nach einem der vorstehenden Ansprüche, **dadurch gekennzeichnet, dass** es ein oder mehrere Inhibitoren, insbesondere ausgewählt aus N-Oxylradikalen, Phenothiazinderivaten, Galvinoxylradikalen, Triphenylphosphit, nicht-alkylierten oder alkylierten Hydrochinonen, wie Hydrochinon, Mono-, Di- oder Trimethylhydrochinon, tert.-Butylhydrochinon, Hydrochinonmonoethylether oder p-Benzochinon, nichtalkylierten oder alkylierten Phenolen, wie 4,4'-Methylen-bis(2,6-di-tert-butylphenol), 1,3,5-Trimethyl-2,4,6-tris(3,5-di-tert-butyl-4-hydroxybenzyl)-benzol, nichtalkylierten oder alkylierten Brenzcatechinen, wie tert.-Butylbrenzcatechin, 3,5-Di-tert-butyl-1,2-benzoldiol oder 4-tert.-Butyl-1,2-benzoldiol, 4-Methoxyphenol, 2,4-Dimethyl-6-tert-butylphenol (TBX, am stärksten bevorzugt), 2,2'-Methylen-bis-(6-tert-butyl-4-methylphenol), Ethylenbis(oxyethylen)-bis-(3-(5-tert-butyl-4-hydroxy-m-tolyl)-propionat); und ferner dem p-Kresol-dicyclopentadienisobutylen-Reaktionsprodukt der Formel 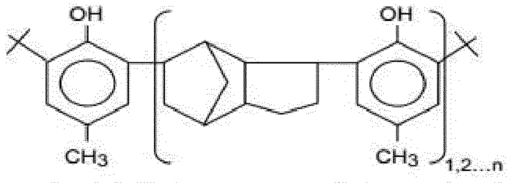 beinhaltet, insbesondere ausgewählt nichtalkylierten oder alkylierten Phenolen.

8. Kunstmörtelsystem nach einem der vorstehenden Ansprüche, **dadurch gekennzeichnet, dass** es ein oder mehrere Silane beinhaltet.

9. Kunstmörtelsystem nach einem der vorstehenden Ansprüche in Form eines Zweikomponentensystems oder -kits mit einer Reaktivharzkomponente (A) und einer Härterkomponente (B).

10. Kunstmörtelsystem nach einem der vorstehenden Ansprüche, beinhaltend eine Reaktivharzkomponente auf Basis eines radikalisch härtbaren Reaktivharz ausgewählt aus ein oder mehreren ungesättigten Carbonsäureestern, insbesondere aus jeweils propoxylierten oder insbesondere ethoxylierten aroma-tische Diol-, wie Bis-phenol-A-, Bisphenol-F- oder Novolak-(insbesondere di-) (meth)acrylaten (besonders bevorzugt); Epoxy(meth)acrylaten, insbesondere in Form von Umsetzungsprodukten von Di- oder Poly-epoxiden, z.B. Bisphenol-A-, Bisphenol-F- oder Novolakdi- und/ oder -poly-glycidylethern, mit ungesättigten Carbonsäuren, z.B. C2-C7-Alkencarbonsäuren, wie insbesondere (Meth)acrylsäure; Urethan- und/oder Harnstoff(meth)-acrylate, insbesondere Urethan(meth)acry¬late (besonders bevorzugt) (auch als "Vinylester¬¬urethane" bezeichnet), die z.B. durch Umsetzung von Di- und/oder Poly-isocyanaten (höherfunktionelle Isocya¬nate) mit geeigneten (Meth)-Acrylverbindungen (wie z.B. Hydroxyethyl- oder Hydroxypropylmethacrylat), gegebenenfalls unter Mitwirkung von Hydro¬xyverbindungen, die mindestens zwei Hydroxylgruppen enthalten, erhalten werden; oder ferner ungesättigten Polyesterharzen, oder zwei oder mehr dieser härtbaren ungesättigten organischen Bestandteile.

11. Kunstmörtelsystem nach Anspruch 10, wobei das Reaktivharz ein Urethan(meth)acrylat in radikalisch härtbaren Reaktivharzen auf Urethan(meth)acrylatbasis beinhaltet.

12. Verwendung eines mehr-(insbesondere zwei-) komponentigen Kunstmörtelsystems wie in einem der Ansprüche 1 bis 11 definiert in der Befestigungstechnik im Bauwesen, insbesondere zur Befestigung von Verankerungselementen, wie Bolzen oder dergleichen, in einer Aussparung oder einem Loch, insbesondere einem Bohrloch, jeweils in einem Bausubstrat, oder zur Fixierung von Bewehrungselementen in Aussparungen in Beton oder einem anderen Bausubstrat.

13. Verfahren zum Verkleben von Gegenständen miteinander, bei dem ein mehr-(insbesondere zwei-)komponentiges Kunstmörtelsystem wie in einem der Ansprüche 1 bis 11 erste Ausführungsform definiert, auf die ganze oder einen Teil einer zu verklebenden Oberfläche eines Gegenstandes oder Substrates aufgetragen oder eingebracht wird und die zu verklebenden Oberflächen der Gegenstände miteinander in Berührung gebracht werden und das Kunstmörtelsystem aushärten gelassen wird.

14. Verfahren nach Anspruch 13, **dadurch gekennzeichnet, dass** es sich bei den zu verklebenden Gegenständen um
- ein Verankerungselement und ein Bausubstrat handelt, wobei insbesondere die Komponenten eines in einem der Ansprüche 1 bis 11 definierten Kunstmörtelsystems in eine Aussparung oder insbesondere ein (in erster Linie Bohr-) Loch eines Bausubstrates eingebracht werden, gleichzeitig mit oder vor Einbringen eines einzuklebenden Verankerungselementes; oder
- ein Bewehrungselement, wobei insbesondere die Komponenten eines in einem der Ansprüche 1 bis 11 definierten Kunstmörtelsystems in eine Aussparung eines Bausubstrates, wie insbesondere Beton, eingebracht werden, gleichzeitig mit, nach oder vor Einbringen eines einzuklebenden Bewehrungselements.

15. Reaktivharzkomponente für ein Kunstmörtelsystem wie in einem der Ansprüche 1 bis 11 definiert, umfassend einen wie in einem dieser Ansprüche genannten Gelzeitstabilisator.

16. Verwendung von Ascorbinsäure, insbesondere Vitamin C, oder einem Ester von Ascorbinsäure mit einer langkettigen (insbesondere C₈- bis C₂₀-) Fettsäure; oder von Triphenylphosphit, ferner einem reduzierenden Zucker oder anderen Aldehyd, Natriumsulfit, Natriumdithionit und Natriumthiosulfat, oder Mischungen von zwei oder mehr der genannten Verbindungen, als Gelzeitstabilisator in einem Kunstmörtelsystem wie in einem der Ansprüche 1 bis 11 definiert.

17. Verwendung eines hydrophilen Gelzeitstabilisators, insbesondere von Vitamin C oder ferner von einem reduzierenden Zucker, einem anderen Aldehyd, Natriumsulfit, Natriumdithionit und Natriumthiosulfat; oder von Mischungen von zwei oder mehr der genannten Gelzeitstabilisatoren; zur Stabilisierung der Gelzeit in einem wie in einem der Ansprüche 1 bis 11 definierten Kunstmörtelsystem für die Befestigungstechnik.
